# EUROPÄISCHE PATENTSCHRIFT

(11) **EP 2 709 733 B1**
(45) Veröffentlichungstag und Bekanntmachung des Hinweises auf die Patenterteilung: **23.03.2016**
(21) Anmeldenummer: 12723606.5
(22) Anmeldetag: 10.05.2012
(51) Int. Cl.: A62D 5/00, A41D 19/00, A41D 19/015, C08J 5/02

(54) **SCHUTZHANDSCHUH**
PROTECTIVE GLOVE
GANT DE PROTECTION

(30) Priorität: 17.05.2011 DE 102011101800
(43) Veröffentlichungstag der Anmeldung: 26.03.2014
(73) Patentinhaber: Finzelberg, Mattias, 68199 Mannheim (DE)
(72) Erfinder: Finzelberg, Mattias, 68199 Mannheim (DE)
(74) Vertreter: Blumbach Zinngrebe
(86) Internationale Anmeldenummer: PCT/EP2012/002005
(87) Internationale Veröffentlichungsnummer: WO 2012/156046

(56) Entgegenhaltungen:
- WO-A2-02/080713
- DE-A1- 2 330 316
- FR-E- 92 518

## Beschreibung

### Gebiet der Erfindung

Die Erfindung betrifft Schutzhandschuhe, die aus einem elastischen, mehrschichtigen polymeren Verbundmaterial bestehen, insbesondere Schutzhandschuhe der Schutzklasse 3 gemäß der Norm DIN 61140, sowie deren Verwendung und ein Verfahren zu deren Herstellung.

### Hintergrund der Erfindung

Die polymeren Schichten eines Schutzhandschuhs stellen Barriereschichten dar. Die Schutzwirkung des Schutzhandschuhs gegen eine Chemikalie ist abhängig von der Durchlässigkeit, d.h. vom Permeationsprozess. Dieser beinhaltet die Schritte Adsorption, Diffusion und Desorption. Während sich Adsorptionsprozesse zwischen der Chemikalie und des Polymers auf den Grad der Quellung bzw. Anlösung der Polymeroberfläche auswirken, bestimmt die Diffusionsgeschwindigkeit, wie schnell die jeweilige Chemikalie die Polymerschicht durchdringt. Die Gesamtgeschwindigkeit aller Permeationsschritte wird als Permeationsgeschwindigkeit definiert. Die Permeationszeit kennzeichnet den Zeitraum vom Kontakt der Chemikalie mit der Polymeroberfläche bis zu ihrem Durchbruch durch die Barriereschicht und ist ein Maß für die Schutzwirkung der jeweiligen Schicht. Demgemäß bieten Polymere, die gegenüber einer Chemikalie eine hohe Permeationszeit aufweisen, einen guten Schutz gegen die betreffende Verbindung über einen vergleichsweise langen Zeitraum. Die Permeationszeit hängt zum einen von der Struktur des Polymers ab, wobei unpolare Polymere gegenüber polaren Lösungsmitteln und polare Polymere gegenüber unpolaren Lösungsmitteln tendenziell hohe Permeationszeiten aufweisen. Durch die Verfügbarkeit einer Vielzahl von geeigneten Polymeren, insbesondere von Elastomeren, sind Schutzhandschuhe für eine Großzahl von chemischen Stoffklassen vorhanden. Als Elastomer wird im Sinne der Erfindung ein vernetztes, flexibles Polymer verstanden. Entsprechende Polymere ohne oder mit einem nur geringen Vernetzungsgrad werden als Kautschuke bezeichnet (vgl. Norm DIN 53501). Ein Schutzhandschuh aus nur einem Polymer ist nur gegen eine kleine Auswahl an Chemikalien beständig. Es ist jedoch gewünscht, dass ein Schutzhandschuh hohe Permeationszeiten für möglichst viele Stoffklassen und damit einen breiten Schutz für den Anwender aufweist. In der Praxis wird dies durch die Verwendung von Verbundmaterialien mehrerer Polymere mit unterschiedlichen physikalischen und chemischen Eigenschaften erreicht. So weisen Schutzhandschuhe aus vernetztem Butylkautschuk und Fluorkautschuk sowohl eine gute Beständigkeit gegenüber unpolaren Lösungsmitteln wie aliphatischen Kohlenwasserstoffen, als auch polaren Lösungsmitteln wie Alkoholen auf. Jedoch deckt ein solches polymeres Verbundmaterial nicht alle Stoffklassen ab. So kann beispielsweise für chlorierte Kohlenwasserstoffe und Ether wie z.B. Tetrahydrofuran keine zufriedenstellende Schutzwirkung erzielt werden. Im Gegensatz zu den oben beschriebenen polymeren Verbundmaterialien zeigen Mischschichten, beispielsweise aus Polymerblends, keine vergleichbaren synergetischen Effekte bezüglich ihrer Schutzwirkung.

Polare Polymere wie Polyvinylalkohol (PVA) bieten gute Beständigkeiten gegen unpolare Chemikalien wie chlorierte Kohlenwasserstoffe, Aromaten und Ether. Insbesondere PVA gehört zu den wenigen Polymeren, die in mehrfach chlorierten Kohlenwasserstoffen wie Chloroform oder aliphatischen Ethern wie Tetrachlorethan nicht quellen oder angelöst werden und so hohe Permeationszeiten für diese Verbindungen aufweisen. Jedoch ist PVA gegen polare Chemikalien wie niedermolekulare Alkohole, Ester oder Ketone wenig beständig. Die größte Herausforderung im Umgang mit PVA liegt in seiner Wasserlöslichkeit und Hydrolyseempfindlichkeit. Diese kann zum einen durch Vernetzung verringert werden. Weiterhin kann PVA durch einen hohen Hydrolysegrad, d.h. über den Anteil der Hydroxylgruppen im Polymer, stabilisiert werden. So führt ein hoher Hydrolysegrad zu größeren kristallinen Domänen innerhalb des Polymers, die schwerer als amorphe Bereiche angelöst werden. Jedoch verringern Hydrolyse- und Vernetzungsgrad die Elastizität des PVA, was bei Verwendung in Schutzhandschuhen nachteilig ist. Eine weitgehende Stabilisierung des PVA ohne Verringerung der Flexibilität ist daher zumindest schwierig, wenn überhaupt möglich.

Die Offenlegungsschrift DE 2 330 316 zeigt einen Schutzhandschuh, welcher aus einem Verbundmaterial aus PVA und einem Kautschuk besteht und durch die PVA-Schicht auch gegen Aromaten und chlorierten Kohlenwasserstoffen schützt. Das PVA bildet einen Film auf dem Kautschuk, wobei die Innenseite des Handschuhs durch die Kautschukschicht gebildet wird und den Benutzer des Schutzhandschuhs vor Feuchtigkeit schützen soll. Problematisch bei diesem Aufbau ist, dass das PVA mit der Zeit hydrolysiert. Die Druckschrift DE 27 59 008 A1 beschreibt einen Schutzhandschuh, der aus einem textilen Gewebe besteht, welches durch ein Tauchverfahren mit Polymeren wie beispielsweise Polyvinylchlorid (PVC) oder Polyvinylalkohol (PVA) beschichtet wurde sowie dessen Herstellungsverfahren und die dafür konzipierte Vorrichtung. Ein solcher Handschuh ist allenfalls gegen eine enge Auswahl an Stoffklassen beständig.

Das Dokument WO 02/080713 A2 beschreibt einen Schutzhandschuh aus einem polymeren Verbundmaterial, welches PVA enthält. Das PVA liegt in einer gelierten Form vor und ist zwischen zwei Elastomerschichten eingebettet. Die Aufbringung der Schichten erfolgt durch Koagulation, also durch Partikelabscheidung aus Dispersionen unter zu Hilfenahme von Flockungsmitteln. Die Schicht über dem PVA fungiert als Feuchtigkeitsbarriere und besteht aus einem synthetischen Kautschuk, vorzugsweise aus carboxyliertem Nitrilkautschuk. Angaben zur Schutzwirkung werden nicht gemacht.

In der Patentanmeldung US 2009/0068443 A1 wird ein Schutzhandschuh aus einem PVA enthaltenden polymeren Verbundmaterial gezeigt. Die PVA-Schicht wird durch eine nachfolgende Kautschukschicht vor Feuchtigkeit geschützt, wobei allerdings haftvermittelnde Schichten verwendet werden. Zur Erhöhung der mechanischen und chemischen Widerstandsfähigkeit ist ferner ein Harz auf Basis einer Dispersion aus Polytetrafluorethen (PTFE) und SiO₂ als oberste Schicht vorgesehen. Nachteiligerweise ist ein solches Harz unflexibel. Ferner wird der Schutzhandschuh mittels eines Dispersionstauchverfahren hergestellt, was in sofern nachteilig ist, als dass zum Abscheiden des Polymers Fällungsreagenzien benötigt werden.

### Allgemeine Beschreibung der Erfindung

Der Erfindung liegt die Aufgabe zugrunde, einen Schutzhandschuh bereitzustellen, welcher eine hohe Schutzwirkung gegenüber einer Vielzahl chemischer Verbindungsklassen und eine hohe mechanische und thermische Widerstandsfähigkeit unter Beibehaltung der Flexibilität und des Tragekomforts aufweist. Eine weitere Aufgabe ist die Bereitstellung eines Verfahrens zur Herstellung eines derartigen Schutzhandschuhs.

Diese Aufgabe wird durch den Gegenstand der unabhängigen Ansprüche gelöst. Vorteilhafte Ausgestaltungen und Weiterbildungen sind in den jeweiligen Unteransprüchen angegeben.

Demgemäß sieht die Erfindung einen getauchten Schutzhandschuh aus einem polymeren Verbundmaterial vor, welches einen Schichtverbund mit einer ersten und einer zweiten Polymerschicht, eine hydrophile PVA-Schicht als dritte Polymerschicht und eine vierte Polymerschicht mit einem Elastomer mit 1,1-Difluorethen-Monomereinheiten (Vinylfluorid-Monomereinheiten) umfasst. Das polymere Verbundmaterial, im Folgenden auch nur als Verbundmaterial bezeichnet, ist derart aufgebaut, dass die PVA-Schicht über dem Schichtverbund und die vierte Polymerschicht über der PVA-Schicht angeordnet ist. Dabei wird die Schicht, welche die Innenseite des Handschuhs bildet, als die unterste (innerste) Schicht verstanden, demnach sind die weiteren Schichten über ihr, d.h. bezogen auf den Handschuh, so wie er vom Benutzer getragen wird außenseitig angeordnet. Zumindest die erste, zweite und vierte Polymerschicht ist dabei mittels eines Lösungstauchverfahren hergestellt. Der Schichtverbund enthält eine erste und eine zweite Polymerschicht unterschiedlicher synthetischer Elastomere. Unter einem Elastomer wird ein vernetzter Kautschuk verstanden. Dem Fachmann ist zwar bekannt, dass eine Vernetzung von Elastomeren deren mechanische Widerstandsfähigkeit erhöht. Bei der vorliegenden Erfindung werden durch die Vernetzung allerdings zusätzlich die Permeationsgeschwindigkeiten innerhalb der vernetzten Polymerschichten gezielt verringert. Dies führt zu einer Erhöhung der Permeationszeiten und damit der Schutzwirkung bei gleichbleibenden Schichtdicken. Die quantitative Ausprägung dieses Effekts ist proportional zum Vernetzungsgrad des Elastomers. Über die Parameter Vulkanisationsdauer, -temperatur oder den Druck während der Vulkanisation kann der Vernetzungsgrad beeinflusst werden. Somit kann die Schutzwirkung des Handschuhs nicht nur durch die Wahl der verwendeten Polymere und deren Schichtdicken festgelegt werden. Vielmehr steht mit dem Vernetzungsgrad der einzelnen Polymerschichten ein weiterer Parameter zur Beeinflussung der Permeationszeiten zur Verfügung. Das erfindungsgemäße Design des Verbundmaterials ermöglicht somit die Herstellung von Schutzhandschuhen mit hohen Permeabilitätszeiten, Flexibilität und Tastempfindlichkeit. Beispielsweise kann die Schutzwirkung dünner Schichten erhöht, also Material bei gleichbleibender Schutzwirkung eingespart und ein besonders flexibler, dünner Schutzhandschuh erhalten werden. Ebenfalls ist es möglich, durch Vernetzung die Schutzwirkung bei gleichbleibender Materialstärke so zu erhöhen, dass beispielsweise Schutzhandschuhe mit einer besonders großen Schutzwirkung zugänglich sind, die ohne den entsprechenden Vernetzungsgrad weniger flexibel wären. Die Erfindung betrifft allgemein Schutzhandschuhe, welche eine geringe Durchlässigkeit und damit eine hohe Schutzwirkung sowohl für polare als auch unpolare Chemikalien aufweisen.

In einer Weiterbildung der Erfindung werden die erste und zweite Polymerschicht gemeinsam vulkanisiert. Dies ist vorteilhaft, da die zweite Polymerschicht besser auf der ersten Polymerschicht des Schichtverbunds haftet, wenn diese noch nicht vernetzt ist.

Bei einer bevorzugten Ausführungsform handelt es sich bei dem selbstvernetzten Elastomer der ersten Polymerschicht um ein Copolymer aus Isobuten und Isopren, beispielsweise um einen vernetzten Butylkautschuk (IIR). Die zweite und/oder vierte Polymerschicht besteht aus einem fluorierten Elastomer. Fluorophobe Wechselwirkungen führen zu einer hohen Chemikalienbeständigkeit sowie hohen Beständigkeit der zweiten Polymerschicht auch bei Temperaturen von bis zu 200°C. Fluorierte Elastomere übertreffen insbesondere in diesen Punkten Universalkautschuke wie beispielsweise chlorierte Kautschuke oder Nitrilkautschuke. Gegen starke Basen sind Fluorelastomere jedoch nur bedingt beständig. Der Grad der Beständigkeit steigt mit dem Fluorgehalt des Elastomers, gleichzeitig nimmt jedoch die Flexibilität ab. Während beispielsweise Copolymere aus 1,1-Difluorethen und Hexafluorpropen (gemäß IUPAC 1,1,1-Trifluor-(2,3,3-Trifluor)prop-2-en) mit einem Fluorgehalt von bis zu 66% noch typische Eigenschaften eines Elastomers aufweisen, wird z.B. das lineare, teilkristalline Homopolymer Polytetrafluorethen (PTFE) wegen seiner geringen Flexibilität nicht mehr zu den Elastomeren gezählt und zeigt, obwohl es ein Thermoplast ist, duroplastisches Verhalten, was Verarbeitung und Handhabung erschwert. Insbesondere die plastischen, d.h. nicht elastischen Eigenschaften begrenzt die Verwendung geschlossener PTFE-Schichten bei Schutzhandschuhen. Bei der Auswahl des jeweiligen Fluorelastomers werden demnach sowohl Anforderung bezüglich der chemischen Beständigkeit als auch der mechanischen Eigenschaften berücksichtigt.

Ein Elastomer mit Isobuten- und Isopren-Monomereinheiten als erste Polymerschicht bietet eine gute Schutzwirkung gegen polare Lösungsmittel sowie gegen Säuren- und Basen. Seine niedrige Glastemperatur Tg führt zu einer sehr guten Flexibilität auch bei tiefen Temperaturen. Des Weiteren weist es eine geringe Gaspermeabilität auf, d.h. es ist für eine Vielzahl von Gasen wie beispielsweise Chlorwasserstoff oder Ammoniak undurchlässig. Die vergleichsweise hohe Permeabilität des Elastomers mit Isobuten- und Isopren-Monomereinheiten der ersten Polymerschicht für Fette, Öle und Kraftstoffe wird durch Kombination mit der zweiten Polymerschicht kompensiert. Somit zeigt der Schichtverbund eine Schutzwirkung gegen die meisten organischen Lösungsmittel, Säuren, Basen sowie wässrige Medien.

Die dritte Polymerschicht enthält erfindungsgemäß PVA, das auf Grund polarer Hydroxylgruppen gegen unpolare Verbindungen wie Ether, Aromaten und chlorierte Kohlenwasserstoffe beständig ist und hierfür sehr hohe Permeabilitationszeiten aufweist. Die PVA-Schicht bildet demnach eine Barriereschicht, insbesondere gegen unpolare Verbindungen. Somit bietet der Schichtverbund insbesondere für Ether und chlorierte Lösungsmittel eine hohe Schutzwirkung. PVA ist kein Elastomer und zeigt somit nur eine geringe Flexibilität, die unter anderem abhängig von der Kristallinität und somit vom Hydrolysegrad ist. Mit steigendem Hydrolyse- und/oder Vernetzungsgrad steigt die Stabilität der PVA-Schicht, gleichzeitig sinkt deren Flexibilität. Für die Verwendung in einem Schutzhandschuh muss eine Barriereschicht neben der Schutzwirkung jedoch auch eine ausreichende Flexibilität aufweisen.

Erfindungsgemäß wird die PVA enthaltende dritte Polymerschicht im Verbundmaterial durch die darüber liegende vierte Polymerschicht vor Feuchtigkeit geschützt. Dieser Aufbau des Verbundmaterials ermöglicht somit die Verwendung von PVA unabhängig von dessen Hydrolyse- oder Vernetzungsgrad, da keine Stabilisierung der PVA-Schicht erforderlich ist. Dadurch bleibt die PVA-Schicht ausreichend flexibel und es werden bei der Benutzung Risse vermieden, die die Schutzwirkung vermindern würden.

Auf Grund ihrer Hygroskopie enthalten Filme aus PVA Wasser, welches als interner Weichmacher fungiert und die Elastizität erhöht. Dadurch ist die Verwendung von PVA in dem Schutzhandschuh möglich. Die vierte Polymerschicht gewährleistet, dass die PVA-Schicht nicht austrocknet und versprödet und stellt somit eine Feuchtigkeitsschutzschicht für die PVA-Schicht in beide Richtungen (Austrocknen oder Aufweichen) dar.

In einer vorteilhaften Weiterbildung der Erfindung enthält die PVA-Schicht Weichmacher wie beispielsweise Glycerin, wodurch die Elastizität verbessert wird. Zweckmäßigerweise handelt es sich bei der PVA-Schicht um eine aus Lösung getauchte Polymerschicht, da mit einem Lösungstauchverfahren eine gleichmäßigere PVA-Schicht als beispielsweise mit einem Sprühverfahren erhalten werden kann.

Die vierte Polymerschicht enthält ein synthetisches Elastomer und schützt den Polyvinylalkohol der dritten Polymerschicht vor Feuchtigkeit und Austrocknung. Zusätzlich erhöht die vierte Polymerschicht die Schutzwirkung des Verbundmaterials sowohl quantitativ durch Vergrößerung der Gesamtpermeationszeit als auch qualitativ durch ihre chemische Beständigkeit. Des weiteren wirkt sich die vierte Polymerschicht positiv auf die mechanische Stabilität des Verbundmaterials aus, so dass auf weitere Schichten, insbesondere Haftvermittler innerhalb des Verbundmaterials verzichtet werden kann. Somit erfüllt die vierte Polymerschicht eine Mehrfachfunktion.

In einer bevorzugten Ausführungsform enthält die vierte Polymerschicht ein fluoriertes Elastomer. Durch repulsive, d.h. abstoßende Wechselwirkungen wird eine Adsorption von Molekülen an der Schichtoberfläche stark vermindert und die Beständigkeit gegenüber einer großen Anzahl an chemischen Stoffklassen erhöht

Durch die erfindungsgemäße Schichtabfolge des polymeren Verbundmaterials ist es möglich, eine Schutzwirkung zu erzielen, welche größer als die Summe der Schutzwirkungen der einzelnen polymeren Schichten des Verbundmaterials ist. In einer bevorzugten Ausführung der Erfindung enthalten die zweite und/oder die vierte Polymerschicht ein Elastomer mit 1,1-Difluorethen-Monomereinheiten. Fluorelastomere mit 1,1-Difluorethen-Monomerheiten sind gegenüber vielen Chemikalien, Ölen, Kraftstoffen inert und hitzebeständig. Die hohe Reißfestigkeit von bis zu 20 MPa von Fluorkautschuken mit 1,1-Difluorethen-Monomereinheiten führt überdies zu einer hohen mechanischen Beständigkeit des polymeren Verbundmaterials.

In einer besonders vorteilhaften Ausgestaltung der Erfindung enthält die zweite und/oder die vierte Polymerschicht ein Copolymer mit den Monomeren 1,1-Difluorethen und Hexafluorpropen. Als Copolymere im Sinne der Erfindung werden Polymere mit zwei oder mehr verschiedenen Monomereinheiten verstanden. In einer weiteren Ausgestaltung der Erfindung enthält die zweite und/oder die vierte Schicht ein Terpolymer mit den Monomeren 1,1-Difluorethen, Hexafluorpropen und Tetrafluorethen.

Copolymere mit 1,1-Difluorethen und 1Hexafluorpropen sind über einen breiten Temperaturbereich einsetzbar. Durch Glastemperaturen Tg im Bereich von -10 bis -30°C sind die entsprechenden Polymere auch noch bei tiefen Temperaturen elastisch. Copolymere mit 1,1-Difluorethen und Hexafluorpropen können dauerhaft Temperaturen von bis zu 200°C und Temperaturspitzen von über 300°C ausgesetzt werden. Zudem sind diese Copolymere nicht brennbar. In einer vorteilhaften Weiterbildung enthält zumindest die vierte Polymerschicht ein Copolymer mit den Monomeren 1,1-Difluorethen und Hexafluorpropen. Dadurch ist der Schutzhandschuh flammfest gemäß der Norm ASTM F1358 und dies unabhängig davon, ob die darunter liegenden Polymerschichten brennbar sind.

Die Erfindung ermöglicht insbesondere eine Verwendung des Schutzhandschuhs als Hitze- oder Kälteschutz oder als Feuerwehrhandschuh.

In einer weiteren vorteilhaften Weiterbildung der Erfindung enthält die erste Polymerschicht ein halogeniertes, insbesondere bromiertes Elastomer. Halogenierte Elastomere zeigen eine höhere Chemikalien- und Hitzebeständigkeit als ihre entsprechenden halogenfreien Derivate. Weiterhin können chlorierte und bromierte Elastomere Glastemperaturen Tg von bis zu - 70°C aufweisen, d.h. sie sind selbst bei niedrigen Temperaturen flexibel. Zudem lassen sich chlorierte und bromierte Kautschuke leichter vernetzen. In einer besonders vorteilhaften Weiterbildung der Erfindung enthält die erste Polymerschicht halogenierte Elastomere mit Brombutyl-Monomereinheiten. Dies kann beispielsweise ein Brombutylkautschuk (BIIR) sein. Als Brombutyl-Monomereinheiten werden die Wiederholungseinheiten I, II und III verstanden.

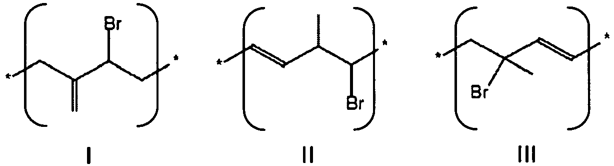

Durch die reaktive, allylische Position der Bromatome im Elastomer lassen sich Brombutylelastomere besonders leicht vernetzen, was einen hohen Vernetzungsgrad ermöglicht. In Kombination mit der hohen Beständigkeit des Brombutylelastomers, beispielsweise gegenüber polaren Lösungsmitteln, Säuren, Basen und wässrigen Medien kann somit die Permeabilität der ersten Polymerschicht weiter gesenkt werden.

Um die außergewöhnliche Inertheit fluorierter Elastomere optimal zu nutzen, sieht eine bevorzugte Ausführungsform der Erfindung vor, dass die zweite Polymerschicht im Schichtverbund über der ersten Polymerschicht angeordnet ist. So wird eine Quellung oder Anlösen der Polymerschichten minimiert, was sich vorteilhaft auf Permeationszeiten und Lebensdauer des Schutzhandschuhs auswirkt. Ein in Hinblick auf Schutzwirkung und mechanische Eigenschaften besonders vorteilhaftes Design des Schichtverbundes sieht vor, dass die erste Polymerschicht ein Elastomer mit Brombutyl-Monomereinheiten und die zweite Polymerschicht ein Elastomer mit den Monomeren 1,1-Difluorethen und/oder Hexafluorpropen enthält.

Der erfindungsgemäße Schutzhandschuh zeigt bezüglich Permeabilitätszeiten, Flexibilität und mechanischer Beständigkeit besonders vorteilhafte Eigenschaften, wenn die vierte Polymerschicht des Verbundmaterials eine Schichtdicke von 0,01 bis 0,05 mm, die dritte Polymerschicht des Verbundmaterials eine Schichtdicke von 0,05 bis 0,15 mm, die zweite Polymerschicht des Verbundmaterials eine Schichtdicke von 0,05 bis 0,2 mm, die erste Polymerschicht des Verbundmaterials eine maximale Schichtdicke von 0,6 mm und/oder der Schichtverbund eine Schichtdicke von 0,1 bis 0,8 mm aufweist. Flexibilität, Tastempfindlichkeit und Tragekomfort des Schutzhandschuhs nehmen mit steigender Gesamtdicke des Verbundmaterials ab. Eine vorteilhafte Ausführung der Erfindung sieht daher vor, das Verbundmaterials so aufzubauen, dass alle Schichten des Verbundmaterials zu einer Erhöhung der Permeabilitätszeit beitragen, wobei deren Beitrag über eine Erhöhung des Diffusionsquerschnittes des Verbundmaterials hinausgeht, anders als bei Schichten zur reinen mechanischen Stabilisierung des Verbundmaterials, wie haftvermittelnde Schichten. So sieht eine Ausführung des Schutzhandschuhs vor, dass die PVA-Schicht haftvermittlerfrei auf dem Schichtverbund aufgebracht und/oder die vierte Polymerschicht haftvermittlerfrei auf der PVA-Schicht aufgebracht ist.

Um die chemische und mechanische Widerstandsfähigkeit der vierten Polymerschicht zu erhöhen, ist es vorteilhaft, diese zu vernetzten. Eine maximale Vulkanisationstemperatur von 100°C führt zu einer Vernetzung der vierten Polymerschicht unter Beibehaltung der Elastizität der PVA-Schicht und bestimmt den Vernetzungsgrad der vierten Polymerschicht. Somit ist die vierte Polymerschicht zwar vernetzt, weist aber einen geringeren Vernetzungsgrad als die erste und/oder zweite Polymerschicht auf.

Die einzelnen Polymerschichten stellen Barriereschichten dar. Es ist bekannt, dass die Permeationszeit von Barriereschichten durch Diffusionskanäle, sogenannte "pin holes", verringert wird. Um diesen Effekt zu minimieren, sieht eine Ausführungsform einen mehrfach getauchten Schutzhandschuh vor, wobei zumindest eine der ersten, zweiten, dritten oder vierten Polymerschicht als ein mehrfach getauchtes Verbundmaterial aus jeweils zwei oder mehr Teilschichten desselben Polymers ausgebildet ist. Besonders vorteilhaft ist ein Schutzhandschuh, bei dem die erste Polymerschicht aus 4 bis 6 separat getauchten Teilschichten, die zweite Polymerschicht aus 3 bis 5 separat getauchten Teilschichten, die dritte Polymerschicht aus 2 bis 5 separat getauchten Teilschichten und/oder die vierte Polymerschicht aus 2 bis 5 separat getauchten Teilschichten aufgebaut ist. Um eine gleichmäßige Schichtdicke und Schutzwirkung über die gesamte Fläche des Handschuhs zu gewährleisten, sollen Artefakte wie beispielsweise Blasen vermieden werden.

Das Herstellungsverfahren sieht zumindest folgende Schritte vor:
Zur Erzeugung einer ersten Polymerschicht wird in einem Schritt a) eine Handschuhform in eine erste Lösung eines synthetischen ersten Kautschuks getaucht. Um eine Vernetzung des Kautschuks in der Lösung oder unmittelbar nach dem Abscheiden der Form zu vermeiden, ist die Temperatur T₁ während des Tauchvorgangs kleiner als die Vernetzungstemperatur des ersten Kautschuks. Nach einer vordefinierten Tauchzeit wird die Handschuhform aus der ersten Lösung entfernt (Schritt b)) und die getauchte erste Polymerschicht wird getrocknet (Schritt c)). Die Schritte a) bis c) werden einfach nacheinander oder zur Erzeugung mehrerer Teilschichten mehrfach durchgeführt.
In einem Schritt d) wird die Handschuhform zur Erzeugung einer zweiten Polymerschicht in die Lösung eines anderen zweiten synthetischen Kautschuks getaucht. Zur Vermeidung einer vorzeitigen Vernetzung des zweiten Kautschuks liegt die Tauchtemperatur T₂ unterhalb der Vernetzungstemperatur des zweiten Kautschuks. Nach einer vordefinierten Tauchzeit wird die Handschuhform in einem Schritt e) aus der zweiten Lösung entfernt. Im nachfolgenden Schritt f) wird die zweite Polymerschicht getrocknet. Die Schritte d) bis f) werden einfach nacheinander oder zur Erzeugung mehrerer Teilschichten mehrfach durchgeführt. Im anschließenden Schritt g) werden die erste und die zweite Polymerschicht unter Druck vulkanisiert. Eine Temperatur kleiner als 230°C während des Autoklaviervorgangs ist vorteilhaft, da so eine Zersetzung insbesondere der ersten Polymerschicht vermieden wird. Nach dem Autoklaviervorgang erfolgt ein Abkühlen der Handschuhform. Im nachfolgenden Schritt h) wird die PVA-Schicht als dritte Polymerschicht durch Tauchen der Handschuhform in eine PVA-Lösung als dritte Lösung erzeugt. Nach einer vordefinierten Tauchzeit wird die Handschuhform aus der dritten Lösung entfernt (Schritt i)) und im nachfolgenden Schritt j) getrocknet. Durch eine maximale Temperatur von 100°C während des Trocknungsprozesses bleibt die Elastizität der PVA-Schicht erhalten. Die Schritte h) bis j) werden einfach nacheinander oder mehrfach nacheinander zur Erzeugung mehrer Teilschichten durchgeführt. Zur Erzeugung einer vierten Polymerschicht wird die Handschuhform in Schritt k) in eine vierte Lösung eines vierten Kautschuks getaucht. Die Tauchtemperatur T₄ liegt unterhalb der Vernetzungstemperatur des vierten Kautschuks. Nach einer vordefinierten Tauchzeit wird die Handschuhform in einem Schritt l) aus der vierten Lösung entfernt und getrocknet (Schritt m), wobei die Schritte k) bis m) einfach nacheinander oder mehrfach nacheinander zur Erzeugung mehrerer Teilschichten durchgeführt werden. In Schritt n) erfolgt eine Vernetzung der vierten Polymerschicht. Die maximale Vernetzungstemperatur im Schritt n) von 100°C, vorzugsweise von etwa 80°C ermöglicht eine Vernetzung der vierten Polymerschicht, ohne dass die PVA-Schicht durch Austrocknen versprödet. Dadurch bleibt die Elastizität der PVA-Schicht erhalten. Nachfolgend wird der Schutzhandschuh von der Handschuhform abgezogen (Schritt o)).

Beim Kautschuk der ersten Lösung handelt es sich bevorzugt um einen halogenierten Kautschuk. In einer besonders bevorzugten Form enthält der erste Kautschuk Brombutyl-Monomereinheiten.

In einer bevorzugten Ausführung der Erfindung enthält der Kautschuk der zweiten Lösung ein fluorhaltiges Monomer. Besonders geeignet sind zweite Kautschuke mit 1,1-Difluorethen als Monomereinheit. In einer besonders bevorzugten Weiterbildung der Erfindung sieht das Herstellungsverfahren eine zweite Kautschuklösung vor, dessen Kautschuk 1,1-Difluorethen und Hexafluorpropen Monomereinheiten enthält.

Die Vulkanisation der ersten und der zweiten Polymerschicht des Schichtverbundes erfolgt bei einem Druck von 3 bis 5 bar und/oder einer Temperatur von 60 bis 230°C. Bevorzugt werden die erste und die zweite Polymerschicht des Schichtverbundes in dem Schritt g) gemeinsam vulkanisiert. Neben verfahrenstechnischen Vorteilen wie Zeit- und Energieersparnis weist der Schichtverbund bei einer gemeinsamen Vulkanisation größere Adhäsionskräfte und somit eine größere mechanische Stabilität auf.

Eine besonders gleichmäßige PVA-Schicht als dritte Polymerschicht wird erhalten, wenn die Temperatur der PVA-Lösung beim Tauchvorgang eine Temperatur von 40 bis 100°C, bevorzugt von 60 bis 95°C und besonders bevorzugt von 70 bis 85°C aufweist. Die Bildung von Artefakten, beispielsweise von Blasen auf der Handschuhoberfläche, kann durch Reduktion der Oberflächenspannung vermieden werden. Die Zugabe entsprechender Additive, bevorzugt von Alkoholen, besonders bevorzugt von *i*-Propanol, stellt eine vorteilhafte Ausgestaltung der Erfindung dar. Um die Elastizität der PVA-Schicht zu erhöhen, wird der PVA-Lösung ferner vorzugsweise ein Weichmacher hinzugefügt. Besonders vorteilhaft wirkt sich in diesem Zusammenhang die Zugabe von Glycerin zur PVA-Lösung aus.

Gemäß einer weiteren vorteilhaften Weiterbildung enthält die vierte Lösung einen fluorierten Kautschuk, insbesondere einen fluorierten Kautschuk welcher das Monomer 1,1-Difluorethen enthält. In einer besonders bevorzugten Ausführung enthält der Kautschuk der vierten Lösung die Monomere 1,1-Difluorethen und Hexafluorpropen. Der durch Schritt n) bedingte Vernetzungsgrad der vierten Polymerschicht wird durch eine maximale Temperatur von 100°C begrenzt, wodurch eine Versprödung der PVA-Schicht vermieden und so die Flexibilität der PVA-Schicht sowie des Verbundmaterials erhalten werden kann. Bevorzugt wird die in Schritt n) beschriebene Vernetzung unter Normaldruck für mehrere, vorzugsweise mindestens 8 Stunden durchgeführt.

Bei Tauchverfahren aus Lösung ist die Schichtdicke der einzelnen Polymerschichten abhängig von der Tauchzeit, der Anzahl der einzelnen Tauchschritte sowie der Viskosität der Lösungen, in die getaucht wird. Im erfindungsgemäßen Verfahren weist die erste Kautschuklösungen bevorzugt eine Viskosität von 850 bis 1500 mPa·s, die zweite Kautschuklösung bevorzugt eine Viskosität von 50 bis 500 mPa·s, die vierte Kautschuklösung bevorzugt eine Viskosität von 50 bis 500 mPa·s und/oder die PVA-Lösung bevorzugt eine Viskosität von 50 bis 250 s (Viskosität bestimmt mit einem Fordbecher 6mm) auf. Das Auftreten von Diffusionskanälen, welche die Schutzwirkung des Handschuhs verringern, kann durch mehrmaliges Tauchen in dieselbe Lösung vermieden werden. Zweckmäßigerweise werden daher die Schritte a) bis c) 4 bis 6 mal, die Schritte d) bis f) 3 bis 5 mal, die Schritte h) bis j) 2 bis 5 mal und/oder die Schritte k) bis m) 2 bis 5 mal durchgeführt. Eine bevorzugte Ausführungsform der Erfindung sieht ein Verfahren vor, bei dem die Polymerschichten so oft bzw. so lange getaucht wird, bis die erste Polymerschicht eine Dicke von maximal 6 mm, die zweite Polymerschicht eine Dicke von 0,05 bis 0,2 mm, die PVA-Schicht eine Dicke von 0,05 bis 0,15 mm und/oder die vierte Polymerschicht eine Dicke von 0,01 bis 0,05 mm erhalten haben. Die Viskosität der Lösung und die Tauchzeit wird bevorzugt so gewählt, dass bei jedem Tauchgang eine Schichtdicke von 0,05 bis 0,09 mm aufgebaut wird. Bevorzugt liegt die Tauchzeit der Tauchvorgänge jeweils zwischen 40 und 200 s.

Abhängig vom Verwendungszweck können Schutzhandschuhe Schäfte unterschiedlicher Länge und Form aufweisen. Insbesondere bei Handschuhen mit langen Schäften, die sich in Richtung der Handschuhöffnung verbreitern, kann es bei einem Tauchvorgang auf Grund der Geometrie zu unterschiedlichen Schichtdicken kommen. Es ist daher günstig, die Handschuhform zumindest bei einem der Tauchgänge mindestens einmal partiell und anschließend vollständig zu tauchen um so die unterschiedlichen Schichtdicken an verschiedenen Stellen der Handschuhform auszugleichen.

Es ist vorteilhaft, die Handschuhformen in beheizbaren Tauchhäusern zu tauchen. So kann nicht nur die jeweilige Lösung temperiert werden, sondern auch die Trocknungsvorgänge zwischen den einzelnen Tauchgängen können im Tauchhaus stattfinden. Eine Rotation der Handschuhformen ist in Hinblick auf Schichtgleichmäßigkeit günstig, da somit lokale Unterschiede in den Schichtdicken durch unterschiedliches Abtropfverhalten vermieden werden. Zum Abziehen des Handschuhs von der Handschuhform kann Druckluft verwendet werden. Ferner weist der Schutzhandschuh einen Rollrand auf, der die Handhabung des Schutzhandschuhs verbessert. In einer bevorzugten Ausführungsform besitzt der Rollrand eine Dicke von 2 bis 5 mm. Optional erfolgen als letzte Schritte Reinigung der Handschuhe und deren Qualitätskontrolle, beispielsweise durch eine visuelle Prüfung.

Im Folgenden wird die Erfindung anhand eines Ausführungsbeispiels und unter Bezugnahme auf die Figuren näher erläutert, wobei gleiche und ähnliche Elemente teilweise mit gleichen Bezugszeichen versehen sind.

### Kurzbeschreibung der Figuren

Es zeigen:
Fig. 1 eine schematische Zeichnung des erfindungsgemäßen Herstellungsverfahrens,
Fig. 2 eine schematische Zeichnung des erfindungsgemäßen Schutzhandschuhs,
Fig. 3 den schematischen Querschnitt durch den Ausschnitt A des erfindungsgemäßen Schutzhandschuhs,
Fig. 4 eine lichtmikroskopische Aufnahme des Ausschnitts A des Ausführungsbeispiels.

### Detaillierte Beschreibung eines Ausführungsbeispiels

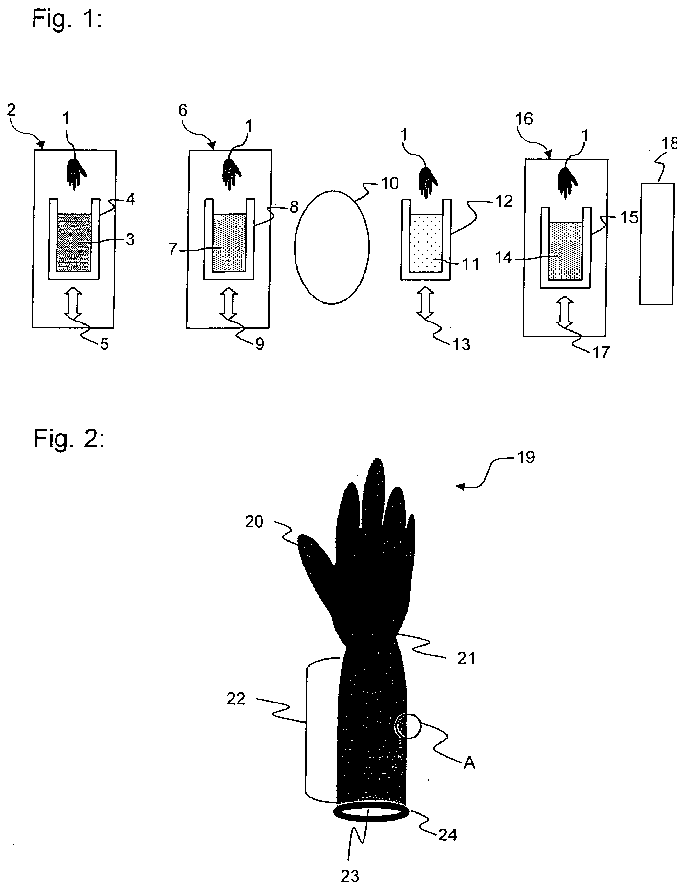

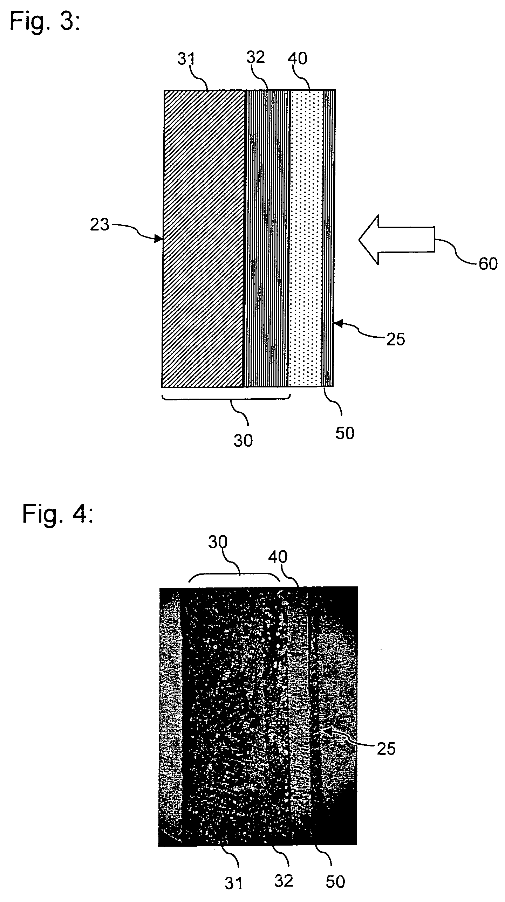

Fig. 1 zeigt schematisch das Herstellungsverfahren eines erfindungsgemäßen Schutzhandschuhs, welches an einem Ausführungsbeispiel näher erläutert wird. Fig. 2 zeigt eine schematische Darstellung des im Ausführungsbeispiel beschriebenen Schutzhandschuhs 19. Der obere Teil des Schutzhandschuhs 19 wird von den Fingern 20 sowie der Handfläche und dem Handrücken gebildet und geht am Handgelenk 21 in den Handschuhschaft 22 über, welcher mit dem Rollrand 24 abschließt. Die Innenseite des Schutzhandschuhs 19 erhält das Bezugszeichen 23. Der Schichtaufbau des polymeren Verbundmaterials wird anhand des Ausschnitts A in Fig. 3 näher beschrieben.

Das in Fig. 1 schematisch dargestellte Verfahren beinhaltet folgende Schritte:
Eine Handschuhform 1 wird in einem beheizten Tauchhaus 2 bei einer Lösungstemperatur T₁= 30°C in ein Tauchbecken 4 mit einer ersten Lösung 3 getaucht. Die erste Lösung 3 enthält Toluol und Brombutylkautschuk und weist einen Feststoffgehalt von 20% auf. Nach einer Tauchzeit von 90 s wird die Handschuhform 1 aus dem Tauchbecken 4 entfernt. Dazu wird das Tauchbecken 4 durch die Hebevorrichtung 5 abgesenkt. Nach dem ersten Tauchgang wird die Handschuhform 1 für einen Zeitraum von 30 Minuten bei 30°C und unter Rotation getrocknet. Der Tauch- sowie der sich anschließende Trocknungsprozess werden 4 bis 6 mal wiederholt, bis die Brombutylschicht eine Schichtdicke von 0,4 mm aufweist. Zur vollständigen Entfernung des Toluols wird die Handschuhform 1 für 12 Stunden bei Raumtemperatur gelagert. Nachfolgend wird die Handschuhform 1 in einem zweiten Tauchhaus 6 in ein Tauchbecken 8 mit einer zweiten Kautschuklösung 7 getaucht. Dazu wird ebenfalls nicht die Handschuhform 1, die Tauchwanne 8 sondern mit Hilfe der Hebevorrichtung 9 bewegt. Die Lösung 7 enthält einen Kautschuk mit den Monomeren 1,1-Difluorethen und Hexafluorpropen und gegebenen Falls Tetrafluorethen. In dem Ausführungsbeispiel wird eine Lösung 7 mit einem Kautschuk verwendet, welcher aus den Monomeren 1,1-Difluorethen, Hexafluorpropen und Tetrafluorethen besteht, z.B. Viton®. Als Lösungsmittel wird Methylethylketon verwendet. Der Feststoffanteil der Viton®-Lösung 7 beträgt 20%. Die Temperatur T₂ der Viton®-Lösung beträgt während des Tauchvorgangs T₂=25°C.

Nach einer Tauchdauer von 120 s wird die Handschuhform 1 aus der Tauchwanne 8 entfernt und im Tauchhaus 6 für 30 Minuten bei einer Temperatur von 25°C unter Rotation getrocknet. Der oben beschriebene Tauchprozess in die Viton®-Lösung 7 und der nachfolgende Trocknungsvorgang werden 3 bis 5 mal wiederholt, bis die Schichtdicke der Viton®-Schicht als zweite Polymerschicht 0,1 mm beträgt. Zur vollständigen Entfernung des Methylethylketons wird die Handschuhform 1 für 12 Stunden bei Raumtemperatur getrocknet. Nachfolgend wird die beschichtete Handschuhform 1 in einem Autoklav 10 für 120 Minuten bei einem Druck von 3 bar und einer Temperatur von 150°C vulkanisiert. Die abgekühlte Handschuhform 1 wird nachfolgend in eine Tauchwanne 12, enthaltend eine wässrige PVA-Lösung 11 mit einer Temperatur von 80°C getaucht. Die PVA-Lösung beinhaltet einen Feststoffanteil von 30% und enthält 0,01 Vol% Glycerin sowie 0,1 Vol% *i*-Propanol.

Um eine gleichmäßige Schichtdicke der PVA-Schicht zu gewährleisten, erfolgt zumindest ein Tauchgang der Handschuhform 1 in die PVA-Lösung 11 stufenweise. Dabei wird die Handschuhform 1 zunächst zweimal bis zum Handgelenk 21 vorgetaucht und anschließend vollständig getaucht. Nach einer Tauchzeit von 40 s wird die Handschuhform 1 mit Hilfe der Hebevorrichtung 13 aus dem Tauchbecken 12 entfernt und unter Rotation bei einer Temperatur zwischen 20° und 40°C, bevorzugt bei einer Temperatur > 30°C, für 10 bis 40 Minuten [BZP1]. getrocknet.

Tauch- und Trocknungsvorgänge werden so oft wiederholt, bis die PVA-Schicht als dritte Polymerschicht eine Schichtdicke von 0,15 mm besitzt.

Die Handschuhform 1 wird abermals in einem beheizten Tauchhaus 16 in eine Tauchwanne 15 mit einer vierten Lösung 14 des Kautschuks mit den Monomeren 1,1-Difluorethen und Hexafluorpropen und gegebenen Falls Tetrafluorethen getaucht. Im Ausführungsbeispiel wird eine Lösung 14 mit einem Kautschuk verwendet, welcher aus den Monomeren 1,1-Difluorethen, Hexafluorethen und Tetrafluorethen besteht, beispielsweise Viton® und als Lösungsmittel Methylethylketon verwendet. Im Ausführungsbeispiel sind die zweite und die vierte Lösung identisch, so dass auch der Ablauf der Tauch- und Trocknungsvorgänge denen der zweiten Schicht entspricht und das Tauchhaus 16 mit dem Tauchhaus 6 identisch sein kann. Jedoch wird die Handschuhform 1 für die vierte Polymerschicht nur zweimal in die Viton®-Lösung getaucht, so dass eine Schichtdicke der vierten Polymerschicht von 0,05 mm erhalten wird. Demnach weisen die zweite und die vierte Polymerschicht unterschiedliche Schichtdicken auf. Ebenfalls weisen die zweite und die vierte Polymerschicht unterschiedliche Vernetzungsgrade auf. Die vierte Polymerschicht ist insbesondere schwächer vernetzt als die zweite Polymerschicht.

Zur Vernetzung der die vierte Polymerschicht bildenden Viton®-Schicht wird die Handschuhform 1 für 12 Stunden in einem Wärmeofen 18 unter Normaldruck bei 70°C getrocknet. Der nun fertige Schutzhandschuh wird mittels Pressluft von der Handschuhform 1 entfernt und nach einer Reinigung einer visuellen Endprüfung unterzogen.

Der Schichtaufbau des mit dem vorstehend beschriebenen Verfahren hergestellten Schutzhandschuhs 19 ist in Fig. 3 schematisch dargestellt, wobei die Teilschichten nicht dargestellt sind. Der erfindungsgemäße Schutzhandschuh bzw. das erfindungsgemäße Verbundmaterial besteht aus vier einzelnen Polymerschichten 31, 32, 40 und 50, die unmittelbar aufeinander folgen. Somit enthält das Verbundmaterial keine Haftvermittlerschichten etc., sondern nur Schichten, die einen Beitrag zur Erhöhung der Schutzwirkung leisten, welcher über den Effekt der Vergrößerung des Diffusionsquerschnittes signifikant hinausgeht. Die erste Polymerschicht 31 bildet die Innenseite 23 des Handschuhs, die äußere Seite 25 des Schutzhandschuhs 19 ist die Oberfläche der vierten Polymerschicht 50. Der Pfeil 60 symbolisiert die Chemikalieneinwirkung von außen auf den Schutzhandschuh 19.

Im Schichtverbund 30 des Ausführungsbeispiels ist die zweite Polymerschicht 32 unmittelbar über der ersten Polymerschicht angeordnet 31. Die erste Polymerschicht 31 besteht aus Brombutylkautschuk und weist eine Schichtdicke von 0,4 mm auf. Diese erste Polymerschicht zeigt nicht nur gegen flüssige Medien eine Barrierewirkung, sondern weist zudem eine sehr geringe Gaspermeabilität auf. Somit schützt die erste Polymerschicht vor Gasen wie beispielsweise Ammoniak oder Chlorwasserstoff. Auf Grund ihrer hohen Elastizität auch bei niedrigen Temperaturen kann die erste Polymerschicht 31 auch mit relativ großen Schichtdicken eingesetzt werden, ohne dass der Tragekomfort signifikant beeinträchtig wird. Verglichen mit natürlichen Kautschuken wie Latex ist es zudem als unterste Polymerschicht nicht allergen. Die zweite Polymerschicht 32 besteht aus einem Fluorelastomer mit den Monomeren 1,1-Difluorethen und Hexafluorpropen und gegebenenfalls Tetrafluorethen, z.B. Viton® und hat eine Schichtdicke von 0,1 mm. Die erste Brombutylschicht 31 und die zweite Viton®-Schicht 32 wurden gemeinsam vulkanisiert und bilden den Schichtverbund 30. Auf diesen folgt unmittelbar eine PVA-Schicht als dritte Polymerschicht 40. Diese weist eine Schichtdicke von 0,15 mm auf. Zur Erhöhung der Flexibilität enthält die plastische PVA-Schicht 40 den Weichmacher Glycerin. Die vierte Polymerschicht 50 besteht aus einem Fluorelastomer mit den Monomeren 1,1-Difluorethen und Hexafluorethen und gegebenen Falls Tetrafluorethen, z.B. Viton®. Die vierte Polymerschicht 50, die in ihrer Zusammensetzung der zweiten Polymerschicht 32 gleicht, bildet die oberste Schicht des Verbundmaterials. Die vierte Viton®-Schicht 50 ist dabei durch Erhitzten des Verbundmaterials auf 80°C schwach vernetzt.

Die erfindungsgemäße Schichtabfolge des getauchten Verbundmaterials des Schutzhandschuhs 19 nutzt durch Kombination der Permeamibilitäten der eingesetzten Polymere, deren Anordnung im Verbundmaterial sowie der Vernetzungsgrade Synergien und ermöglicht so eine Schutzwirkung, welche größer als die Summe der Schutzwirkungen der einzelnen Polymerschichten ist. So weist das Ausführungsbeispiel nicht nur eine exzellente Schutzwirkung sondern auch vorteilhafte mechanische Eigenschaften wie Stabilität und Flexibilität auf. Tabelle 1 zeigt Permeabilitäten des Ausführungsbeispiels für Vertreter aller 12 Kennzeichnungsklassen gemäß DIN EN 374. Das Ausführungsbeispiel zeigt dabei für alle Prüfchemikalien der 12 Kennzeichnungsklassen eine Permeationszeit von mehr als 480 Minuten. Damit stellt die Erfindung einen Schutzhandschuh bereit, welcher für alle der 12 Kennzeichnungsklassen die Schutzwirkung 6 aufweist. Insbesondere die hohen Permeationszeiten für Chemikalien der Kennzeichnungsklassen D, G, H und I, in diesem Fall Methylenchlorid, Diethylamin, THF und Ethylacetat verdeutlichen dabei, dass die erfindungsgemäße Schichtabfolge nicht nur kumulative Effekte nutzt. So sind die hohen Permeationszeiten für Methylenchlorid und THF vorwiegend auf die PVA-Schicht zurückzuführen. Jedoch sind auch die Permeationszeiten für polare Verbindungen wie Diethylamin und Ethylacetat größer als 480 Minuten. Es ist bekannt, dass polare Verbindugen wie beispielsweise Diethylamine hohe Permeationsgeschwindigkeiten in PVA aufweisen. Somit sind die hohen Permeationszeiten des Schutzhandschuhs 19 hier nicht alleine durch die Barrierewirkung der PVA-Schicht zu erklären. Jedoch zeigen auch Schutzhandschuhe aus Brombutylkautschuk und Viton® für Ditehylamin üblicherweise Permeationszeiten, die bis zu einem Faktor 40 niedriger als die des Schutzhandschuhs 19 sind. Keine der Polymerschichten des Schutzhandschuhs 19 zeigt alleine eine annähernd vergleichbare Barrierewirkung gegen Diethylamin oder Ethylacetat. Es wird davon ausgegangen, dass dies auf einen synergetischen Effekt durch den Aufbau des Verbundmaterials und die Kombination der Polymerschichten zurück zuführen ist.

Dieser Effekt ist daher nicht nur als quantitative sondern auch als qualitative Verbesserung der Schutzwirkung zu bewerten. Das Ausführungsbeispiel erfüllt durch seine Permeationszeiten > 480 Minuten gegenüber allen Kennzeichnungsklassen die Anforderung der Schutzklasse 6 gemäß Norm DIN EN 374. Zudem ist das Ausführungsbeispiel als Schutzhandschuh der Schutzkategorie 3, die die höchste Sicherheitsstufe darstellt, zugelassen.

**Tabelle 1: Permeationszeiten**

| Kennzeichnungs -klasse | Prüfchemikalie | Permeationszeit (min) Ausführungsbeispiel |
|---|---|---|
| A | Methanol | > 480 |
| B | Aceton | > 480 |
| C | Acetonitril | > 480 |
| D | CH₂Cl₂ | > 480 |
| E | CS₂ | > 480 |
| F | Toluol | > 480 |
| G | Diethylamin | > 480 |
| H | THF | > 480 |
| I | Ethylacetat | > 480 |
| J | n-Heptan | > 480 |
| K | NaOH | > 480 |
| L | H₂SO₄ 96% | > 480 |

Die zusätzliche Bedeutung der vierten Polymerschicht 50 neben ihrer Funktion als Feuchtigkeitsbarriere zeigt sich zudem beim Flammtest nach Norm ASTM F1358. So erfüllt das Ausführungsbeispiel die Norm, d.h. es ist nicht brennbar und flammresistent, obwohl das Verbundmaterial mit einem Brombutylelastomer als erste Polymerschicht 31 brennbare Komponenten enthält. Dies wird u.a. durch die Anordnung und Ausbildung der vierten Polymerschicht 50 als oberste Schicht sowie die Wahl des entsprechenden Fluorelastomers ermöglicht.

Die oben beschriebenen Eigenschaften lassen eine Verwendung in Bereichen zu, in denen ein Schutzhandschuh eine konstant hohe Schutzwirkung gegen Chemikalien wie auch konstante mechanische Eigenschaften wie beispielsweise Flexibilität über einen großen Temperaturbereich aufweisen muss. In diesem Zusammenhang ist die Verwendung als Kälte- oder Hitzeschutz zu nennen. Das Ausführungsbeispiel eignet sich zur Verwendung als Feuerwehrhandschuh.

Figur 4 zeigt eine lichtmikroskopische Aufnahme des Querschnittes A des oben beschriebenen Ausführungsbeispiels. Der gemeinsam vulkanisierte Schichtverbund 30, bestehend aus Brombutylelastomer und Viton® bildet die Innenseite des Handschuhs 23. Auf den Schichtverbund 30 folgt die PVA-Schicht 40, welche sowohl von den einzelnen Schichten 31 und 32 des Schichtverbundes 30 und der Viton®-Schicht 50 unterscheidbar ist. Die Viton®-Schicht 50 bildet die Außenseite 25 des Schutzhandschuhs.

Es ist dem Fachmann ersichtlich, dass die vorstehend beschriebenen Ausführungsformen beispielhaft zu verstehen sind, und die Erfindung nicht auf diese beschränkt ist, sondern in vielfältiger Weise variiert werden kann, ohne die Erfindung zu verlassen. Ferner ist ersichtlich, dass die Merkmale unabhängig davon, ob sie in der Beschreibung, den Ansprüchen, den Figuren oder anderweitig offenbart sind auch einzelnen wesentliche Bestandteile der Erfindung definieren, selbst wenn sie zusammen mit anderen Merkmalen gemeinsam beschrieben sind.

## Patentansprüche

1. Schutzhandschuh aus einem mehrschichtigen polymeren Verbundmaterial umfassend:
einen Schichtverbund (30) mit einer ersten und einer zweiten Polymerschicht (31, 32) unterschiedlicher synthetischer Elastomere, wobei die zweite Polymerschicht ein fluoriertes Elastomer enthält,
eine hydrophile dritte Polymerschicht (40) enthaltend Polyvinylalkohol, und
eine vierte Polymerschicht (50) enthaltend ein synthetisches Elastomer,
wobei die Polyvinylalkohol enthaltene dritte Polymerschicht (40) über dem Schichtverbund (30) und die vierte Polymerschicht (50) über der Polyvinylalkohol enthaltenen dritten Polymerschicht (40) angeordnet ist.

2. Schutzhandschuh gemäß dem vorherigen Anspruch, wobei die vierte Polymerschicht ein fluoriertes Elastomer enthält.

3. Schutzhandschuh gemäß einem der vorherigen Ansprüche, wobei die zweite Polymerschicht (32) und/oder die vierte Polymerschicht (50) ein Elastomer mit dem Monomer 1,1-Difluorethen oder mit den Monomeren 1,1-Difluorethen und Hexafluorpropen enthält.

4. Schutzhandschuh gemäß einem der vorherigen Ansprüche, wobei die erste Polymerschicht (31) ein halogeniertes Elastomer, bevorzugt ein Elastomer mit dem Monomer Brombutyl enthält.

5. Schutzhandschuh gemäß einem der vorherigen Ansprüche, wobei die zweite Polymerschicht (32) über der ersten Polymerschicht (31) angeordnet ist.

6. Schutzhandschuh gemäß einem der vorherigen Ansprüche, wobei der Schichtverbund (30) aus einer Polymerschicht (31), umfassend ein synthetisches, halogeniertes Elastomer, insbesondere ein Elastomer, welches als Monomer Brombutyl enthält, und einer Polymerschicht (32), umfassend ein Elastomer, welches als Monomere 1,1-Difluorethen und/oder Hexafluorpropen, enthält, besteht.

7. Schutzhandschuh gemäß einem der vorherigen Ansprüche, wobei die Polyvinylalkohol enthaltene dritte Polymerschicht (40) einen Weichmacher enthält.

8. Schutzhandschuh gemäß einem der vorherigen Ansprüche, wobei die vierte Polymerschicht (50) eine Schichtdicke von 0,01 bis 0,05 mm, die dritte Polymerschicht (40) eine Schichtdicke von 0,05 bis 0,15 mm, die zweite Polymerschicht (32) eine Schichtdicke von 0,05 bis 0,2 mm, die erste Polymerschicht (31) eine maximale Schichtdicke von 0,6 mm und/oder der Schichtverbund (30) eine Schichtdicke von 0,1 bis 0,8 mm aufweist.

9. Schutzhandschuh gemäß einem der vorherigen Ansprüche, wobei die erste und zweite Polymerschicht (31, 32) des Schichtverbundes (30) gemeinsam vulkanisiert sind.

10. Schutzhandschuh gemäß einem der vorherigen Ansprüche, wobei die Polyvinylalkohol enthaltende dritte Polymerschicht (40) eine getauchte Polymerschicht ist.

11. Schutzhandschuh gemäß einem der vorherigen Ansprüche, wobei zumindest eine der ersten, zweiten, dritten oder vierten Polymerschicht (31, 32, 40, 50) als ein mehrfach getauchtes Verbundmaterial aus jeweils zwei oder mehr Teilschichten aus demselben Polymer ausgebildet ist, wobei bevorzugt die erste Polymerschicht (31) aus 4 bis 6 separat getauchten Teilschichten, die zweite Polymerschicht (32) aus 3 bis 5 separat getauchten Teilschichten, die dritte Polymerschicht (40) aus 2 bis 5 separat getauchten Teilschichten und/oder die vierte Polymerschicht (50) aus 2 bis 5 separat getauchten Teilschichten aufgebaut ist.

12. Verwendung eines Schutzhandschuhs gemäß einem der vorherigen Ansprüche als Hitze- oder Kälteschutz oder als Feuerwehrhandschuh.

13. Verfahren zur Herstellung eines Schutzhandschuhs aus einem mehrschichtigen, polymeren Verbundmaterial zumindest mit den Schritten:
a) Tauchen einer Handschuhform (1) in eine erste Lösung (3) eines synthetischen ersten Kautschuks bei einer Temperatur T₁, wobei T₁ kleiner als die Vernetzungstemperatur des ersten Kautschuks ist, zur Erzeugung einer synthetischen ersten Polymerschicht (31),
b) Entfernen der Handschuhform (1) nach einer vordefinierten Tauchzeit aus der ersten Kautschuklösung (3),
c) Trocknen der getauchten ersten Polymerschicht (31), wobei die Schritte a) bis c) ein- oder mehrfach nacheinander durchgeführt werden,
d) Tauchen der Handschuhform (1) in eine zweite Lösung (7) eines synthetischen zweiten Kautschuks bei einer Temperatur T₂, wobei T₂ kleiner als die Vernetzungstemperatur des zweiten Kautschuks ist, zur Erzeugung einer synthetischen zweiten Polymerschicht (32),
e) Entfernen der Handschuhform (1) nach einer vordefinierten Tauchzeit aus der zweiten Kautschuklösung (7),
f) Trocknen der getauchten zweiten Polymerschicht (32), wobei die Schritte d) bis f) ein- oder mehrfach nacheinander durchgeführt werden,
g) Vulkanisieren durch Autoklavieren der ersten und zweiten Polymerschicht (31, 32)
h) Eintauchen der Handschuhform (1) in eine PVA-Lösung als dritte Lösung (11) zur Erzeugung einer PVA-Schicht als dritte Polymerschicht (40),
i) Entfernen der getauchten Handschuhform (1) nach einer vordefinierten Tauchzeit aus der PVA-Lösung (11),
j) Trocknen der PVA-Schicht (40) bei einer Temperatur kleiner als 100°C, wobei die Schritte h) bis j) ein oder mehrfach nacheinander durchgeführt werden,
k) Tauchen der Handschuhform (1) in eine vierte Lösung (14) eines synthetischen vierten Kautschuks bei einer Temperatur T₄, wobei T₄ kleiner als die Vernetzungstemperatur des vierten Kautschuks, ist zur Erzeugung einer vierten Polymerschicht (50) über der PVA-Schicht (40),
l) Entfernen der beschichteten Handschuhform (1) nach einer vordefinierten Tauchzeit aus der vierten Kautschuklösung (14),
m) Trocknen der vierten Polymerschicht (50) bei einer Temperatur T₄, wobei die Schritte k) bis m) ein- oder mehrfach nacheinander durchgeführt werden,
n) Erhitzen der beschichteten Handschuhform (1) auf eine Temperatur von maximal 100°C,
o) Abziehen des Handschuhs von der Handschuhform (1).

14. Verfahren gemäß dem vorherigen Anspruch, wobei der zweite Kautschuk der zweiten Lösung (7) und/oder der vierte Kautschuk der vierten Lösung (14) zumindest ein fluoriertes Monomer, insbesondere 1,1-Difluorethen und/oder Hexafluorpropen enthält.

15. Verfahren gemäß einem der vorherigen Ansprüche 13 oder 14, wobei die erste Lösung (3) einen ersten synthetischen, halogenierten Kautschuk, bevorzugt einen Kautschuk mit dem Monomer Brombutyl enthält.

16. Verfahren gemäß einem der vorherigen Ansprüche 13 bis 15, wobei die Viskosität der ersten Kautschuklösung (3) 850 bis 1500 mPa·s, die Viskosität der zweiten Kautschuklösung (7) 50 bis 500 mPa·s, die Viskosität der vierten Kautschuklösung (14) 50 bis 500 mPa·s und/oder die Viskosität der PVA-Lösung (11) 50 bis 250 s, bestimmt mit einem 6 mm-Fordbecher, beträgt.

17. Verfahren gemäß einem der vorherigen Ansprüche 13 bis 16, wobei die Schritte a) bis c) 4 bis 6 mal, die Schritte d) bis f) 3 bis 5 mal, die Schritte h) bis j) 2 bis 5 mal und/oder die Schritte k) bis m) 2 bis 5 mal durchgeführt werden.

18. Verfahren gemäß einem der vorherigen Ansprüche 13 bis 17, wobei die Handschuhform (1) zumindest in einem der Tauchvorgänge mindestens einmal partiell vorgetaucht und nachfolgend vollständig getaucht wird.

19. Verfahren gemäß einem der vorherigen Ansprüche 13 bis 18, wobei die PVA-Lösung (11) beim Tauchvorgang eine Temperatur von 40 bis 100°C aufweist.

20. Verfahren gemäß einem der vorherigen Ansprüche 13 bis 19, wobei der PVA-Lösung (11) ein Weichmacher und/oder ein Additiv zur Reduktion der Oberflächenspannung zugegeben wird.

21. Verfahren gemäß einem der vorherigen Ansprüche 13 bis 20, wobei die Beschichtung in dem Schritt n) unter Normaldruck und/oder für mindestens 8 Stunden erhitzt wird.

## Claims

1. A protective glove composed of a multi-layered polymer composite material including:
a laminate (30) composed of a first and second polymer layer (31, 32) of different synthetic elastomers, wherein the second polymer layer contains a fluorinated elastomer,
a hydrophilic third polymer layer (40) containing polyvinyl alcohol, and
a fourth polymer layer (50) containing a synthetic elastomer,
wherein said hydrophilic third polymer layer (40) containing polyvinyl alcohol is disposed over said laminate (30) and the fourth polymer layer (50) is disposed over said hydrophilic third polymer layer (40) containing polyvinyl alcohol.

2. The protective glove according to the preceding claim, wherein the fourth polymer layer contains a fluorinated elastomer.

3. The protective glove according to one of the preceding claims, wherein the second polymer layer (32) and/or the fourth polymer layer (50) contain(s) an elastomer with the monomer 1,1-difluoroethylene or with the monomers 1,1-difluoroethylene and hexafluoropropene

4. The protective glove according to one of the preceding claims, wherein the first polymer layer (31) contains a halogenated elastomer, preferred an elastomer with the monomer bromobutyl.

5. The protective glove according to one of the preceding claims, wherein the second polymer layer (32) is disposed over the first polymer layer (31).

6. The protective glove according to one of the preceding claims, wherein the laminate (30) is composed of a polymer layer (31), which includes a synthetic, halogenated elastomer, in particular an elastomer that contains bromobutyl as a monomer, and of a polymer layer (32), which includes an elastomer that contains 1,1-difluoroethylene and/or hexafluoropropene as monomers.

7. The protective glove according to one of the preceding claims, wherein the hydrophilic third polymer layer (40) containing polyvinyl alcohol contains a plasticizer.

8. The protective glove according to one of the preceding claims, wherein the fourth polymer layer (50) has a layer thickness of 0.01 to 0.05 mm, the third polymer layer (40) has a layer thickness of 0.05 to 0.15 mm, the second polymer layer (32) has a layer thickness of 0.05 to 0.2 mm, the first polymer layer (31) has a maximum layer thickness of 0.6 mm, and/or the laminate (30) has a layer thickness of 0.1 to 0.8 mm.

9. The protective glove according to one of the preceding claims, wherein the first and second polymer layers (31, 32) of the laminate (30) are jointly vulcanized.

10. The protective glove according to one of the preceding claims, wherein the hydrophilic third polymer layer (40) containing polyvinyl alcohol is a dipped polymer layer.

11. The protective glove according to one of the preceding claims, wherein at least one of the first, second, third, or fourth polymer layers is embodied in the form of a multiply dipped composite material that is respectively composed of two or more sublayers of the same polymer, wherein the first polymer layer (31) is composed of 4 to 6 separately dipped sublayers, the second polymer layer (32) is composed of 3 to 5 separately dipped sublayers, the third polymer layer (40) is composed of 2 to 5 separately dipped sublayers, and/or the fourth polymer layer (50) is composed of 2 to 5 separately dipped sublayers.

12. A use of a protective glove according to one of the preceding claims for protection against heat or cold or as a firefighting glove.

13. A method for manufacturing a protective glove composed of a multi-layered polymer composite material including at least the steps:
a) dipping of a glove form (1) into a first solution (3) of a synthetic first rubber at a temperature T₁ - where T₁ is lower than the cross-linking temperature of the first rubber - to produce a synthetic first polymer layer (31),
b) removal of the glove form (1) from the first solution (3) of a synthetic first rubber after a predefined dipping time,
c) drying of the dipped synthetic first polymer layer (31), where steps a) through c) are carried out in sequence once or several times,
d) dipping of the glove form (1) into a second solution (7) of a synthetic second rubber at a temperature T₂ - where T₂ is lower than the cross-linking temperature of the second rubber - to produce a synthetic second polymer layer (32),
e) removal of the glove form (1) from the second solution (7) of a synthetic second rubber after a predefined dipping time,
f) drying of the dipped second polymer layer (32), where steps d) through f) are carried out in sequence once or several times,
g) vulcanization by autoclaving of the first and second polymer layers (31, 32),
h) dipping of the glove form (1) into a PVA solution serving as the third solution (11) to produce a PVA layer as a third polymer layer (40),
i) removal of the dipped glove form (1) from the PVA solution (11) after a predefined dipping time,
j) drying of the PVA layer (40) at a temperature lower than 100°C, where steps h) through j) are carried out in sequence once or several times,
k) dipping of the glove form (1) into a fourth solution (14) of a synthetic fourth rubber at a temperature T₄ - where T₄ is lower than the cross-linking temperature of the fourth rubber - to produce a fourth polymer layer (50) over the PVA layer (40),
l) removal of the dip-coated glove form (1) from the fourth solution (14) of a synthetic fourth rubber after a predefined dipping time,
m) drying of the fourth polymer layer (50) at a temperature T₄, where steps k) through m) are carried out in sequence once or several times,
n) heating of the dip-coated glove form (1) to a maximum temperature of 100°C,
o) removal of the glove from the glove form (1).

14. The method according to the preceding claim, wherein the second rubber of the second solution (7) and/or the fourth rubber of the fourth solution (14) contain(s) at least a fluorinated monomer, in particular 1,1-difluoroethylene and/or hexafluoropropene.

15. The method according to one of the preceding claims 13 or 14, wherein the first solution (3) contains a first synthetic, halogenated rubber, preferred a rubber with the monomer bromobutyl.

16. The method according to one of the preceding claims 13 to 15, wherein the viscosity of the first solution (3) of a synthetic first rubber is 850 to 1500 mPa·s, the viscosity of the second solution (7) of a synthetic second rubber is 50 to 500 mPa·s, the viscosity of the fourth solution (14) of a synthetic fourth rubber is 50 to 500 mPa·s, and/or the viscosity of the PVA solution (11) is 50 to 250 s, determined with a 6 mm Ford beaker.

17. The method according to one of the preceding claims 13 to 16, wherein steps a) through c) are carried out 4 to 6 times, steps d) through f) are carried out 3 to 5 times, steps h) through j) are carried out 2 to 5 times, and/or steps k) through m) are carried out 2 to 5 times.

18. The method according to one of the preceding claims 13 to 17, wherein in at least one of the dip-coating procedures, the glove form (1) is partially pre-dipped at least once and is then dipped completely.

19. The method according to one of the preceding claims 13 to 18, wherein the PVA solution (11) during the dip-coating procedure has a temperature of 40 to 100°C.

20. The method according to one of the preceding claims 13 to 19, wherein a plasticizer and/or an additive to reduce the surface tension is added to the PVA solution (11).

21. The method according to one of the preceding claims 13 to 20, wherein in step n), the coating is heated at normal pressure and/or for at least 8 hours.

## Revendications

1. Gant de protection constitué d'un matériau composite polymère multicouche, comprenant :
une structure stratifiée (30) comportant une première et une deuxième couche polymère (31, 32) d'élastomères synthétiques différents, où la deuxième couche polymère contient un élastomère fluoré,
une troisième couche polymère (40) hydrophile contenant de l'alcool polyvinylique, et
une quatrième couche polymère (50) contenant un élastomère synthétique,
où la troisième couche polymère (40) contenant de l'alcool polyvinylique est disposée sur la structure stratifiée (30) et la quatrième couche polymère (50) est disposée sur la troisième couche polymère (40) contenant de l'alcool polyvinylique.

2. Gant de protection selon la revendication précédente, dans lequel la quatrième couche polymère contient un élastomère fluoré.

3. Gant de protection selon l'une des revendications précédentes, dans lequel la deuxième couche polymère (32) et/ou la quatrième couche polymère (50) contient/contiennent un élastomère avec le monomère 1,1-difluoréthène ou avec les monomères 1,1-difluoréthène et hexafluorpropène.

4. Gant de protection selon l'une des revendications précédentes, dans lequel la première couche polymère (31) contient un élastomère halogéné, de préférence un élastomère avec le monomère brombutyle.

5. Gant de protection selon l'une des revendications précédentes, dans lequel la deuxième couche polymère (32) est disposée sur la première couche polymère (31).

6. Gant de protection selon l'une des revendications précédentes, dans lequel la structure stratifiée (30) est constituée d'une couche polymère (31), comprenant un élastomère synthétique halogéné, en particulier un élastomère qui contient du brombutyle en tant que monomère, et d'une couche polymère (32) comprenant un élastomère qui contient en tant que monomères du 1,1-difluoréthène et/ou hexafluorpropène.

7. Gant de protection selon l'une des revendications précédentes, dans lequel la troisième couche polymère (40) contenant de l'alcool polyvinylique contient un plastifiant.

8. Gant de protection selon l'une des revendications précédentes, dans lequel la quatrième couche polymère (50) présente une épaisseur de couche allant de 0,01 à 0,05 mm, la troisième couche polymère (40) présente une épaisseur de couche allant de 0,05 à 0,15 mm, la deuxième couche polymère (32) présente une épaisseur de couche allant de 0,05 à 0,2 mm, la première couche polymère (31) présente une épaisseur de couche maximale de 0,6 mm et/ou la structure stratifiée (30) présente une épaisseur de couche allant de 0,1 à 0,8 mm.

9. Gant de protection selon l'une des revendications précédentes, dans lequel la première et la deuxième couche polymère (31, 32) de la structure stratifiée (30) sont vulcanisées ensemble.

10. Gant de protection selon l'une des revendications précédentes, dans lequel la troisième couche polymère (40) contenant de l'alcool polyvinylique est une couche polymère réalisée par immersion.

11. Gant de protection selon l'une des revendications précédentes, dans lequel au moins une des première, deuxième, troisième ou quatrième couches polymères (31, 32, 40, 50) est réalisée comme matériau composite à immersion multiple, respectivement à partir de deux ou plus de deux couches élémentaires du même polymère, où la première couche polymère (31) est de préférence constituée de 4 à 6 couches élémentaires à immersion séparée, la deuxième couche polymère (32) est constituée de 3 à 5 couches élémentaires à immersion séparée, la troisième couche polymère (40) est constituée de 2 à 5 couches élémentaires à immersion séparée et/ou la quatrième couche polymère (50) est constituée de 2 à 5 couches élémentaires à immersion séparée.

12. Utilisation d'un gant de protection selon l'une des revendications précédentes en tant que protection contre la chaleur ou contre le froid ou en tant que gant pour pompier.

13. Procédé de fabrication d'un gant de protection constitué d'un matériau composite polymère multicouche, comprenant au moins les étapes suivantes :
a) immersion d'un moule à gant (1) dans une première solution (3) d'un premier caoutchouc synthétique à une température T₁, où T₁ est inférieure à la température de réticulation du premier caoutchouc, en vue de la réalisation d'une première couche polymère (31) synthétique,
b) retrait du moule à gant (1) de la première solution de caoutchouc (3), après un temps d'immersion prédéfini,
c) séchage de la première couche polymère (31) réalisée par immersion, où les étapes a) à c) sont exécutées une ou plusieurs fois les unes après les autres;
d) immersion du moule à gant (1) dans une deuxième solution (7) d'un deuxième caoutchouc synthétique à une température T₂, où T₂ est inférieure à la température de réticulation du deuxième caoutchouc, en vue de la réalisation d'une deuxième couche polymère (32) synthétique,
e) retrait du moule à gant (1) de la deuxième solution de caoutchouc (7), après un temps d'immersion prédéfini,
f) séchage de la deuxième couche polymère (32) réalisée par immersion, où les étapes d) à f) sont exécutées une ou plusieurs fois les unes après les autres;
g) vulcanisation des première et deuxième couches polymères (31, 32) par traitement à l'autoclave,
h) immersion du moule à gant (1) dans une solution de PVA (7) en tant que troisième solution (11), en vue de la réalisation d'une couche de PVA en tant que troisième couche polymère (40),
i) retrait du moule à gant (1) immergé de la solution de PVA (11), après un temps d'immersion prédéfini,
j) séchage de la couche de PVA (40) à une température inférieure à 100°C, où les étapes h) à j) sont exécutées une ou plusieurs fois les unes après les autres,
k) immersion du moule à gant (1) dans une quatrième solution (14) d'un quatrième caoutchouc synthétique à une température T₄, où T₄ est inférieure à la température de réticulation du quatrième caoutchouc, en vue de la réalisation d'une quatrième couche polymère (50) sur la couche de PVA (40),
l) retrait du moule à gant (1) revêtu de la quatrième solution de caoutchouc (14), après un temps d'immersion prédéfini,
m) séchage de la quatrième couche polymère (50) à une température T₄, où les étapes k) à m) sont exécutées une ou plusieurs fois les unes après les autres;
n) chauffage du moule à gant (1) revêtu, jusqu'à une température d'au maximum 100 °C,
o) retrait du gant du moule à gant (1).

14. Procédé selon la revendication précédente, selon lequel le deuxième caoutchouc de la deuxième solution (7) et/ou le quatrième caoutchouc de la quatrième solution (14) contient au moins un monomère fluoré, en particulier du 1,1-difluoréthène ou du hexafluorpropène.

15. Procédé selon l'une des revendications précédentes 13 ou 14, selon lequel la première solution (3) contient un premier caoutchouc synthétique halogéné, de préférence un caoutchouc avec le monomère brombutyle.

16. Procédé selon l'une des revendications précédentes 13 à 15, selon lequel la viscosité de la première solution de caoutchouc (3) est comprise entre 850 et 1 500 mPa·s, la viscosité de la deuxième solution de caoutchouc (7) est comprise entre 50 et 500 mPa·s, la viscosité de la quatrième solution de caoutchouc (14) est comprise entre 50 et 500 mPa·s et/ou la viscosité de la solution de PVA (11) est comprise entre 50 et 250 s, la détermination étant effectuée à l'aide d'une coupe de Ford.

17. Procédé selon l'une des revendications précédentes 13 à 16, selon lequel les étapes a) à c) sont exécutées 4 à 6 fois, les étapes d) à f) sont exécutées 3 à 5 fois, les étapes h) à j) 2 à 5 fois et/ou les étapes k) à m) 2 à 5 fois.

18. Procédé selon l'une des revendications précédentes 13 à 17, selon lequel le moule à gant (1), au cours d'au moins une des opérations d'immersion, est soumis au moins une fois à une immersion préalable partielle et est ensuite soumis à une immersion totale.

19. Procédé selon l'une des revendications précédentes 13 à 18, selon lequel la solution de PVA (11) présente une température allant de 40 à 100 °C pendant l'opération d'immersion.

20. Procédé selon l'une des revendications précédentes 13 à 19, selon lequel on ajoute un plastifiant et/ou un additif de réduction de la tension superficielle à la solution de PVA (11).

21. Procédé selon l'une des revendications précédentes 13 à 20, selon lequel le revêtement est chauffé à l'étape n) sous pression normale et/ou pendant au moins 8 heures.
